# EUROPÄISCHE PATENTSCHRIFT

(11) **EP 1 019 335 B1**
(45) Veröffentlichungstag und Bekanntmachung des Hinweises auf die Patenterteilung: **05.06.2002**
(21) Anmeldenummer: 98942958.4
(22) Anmeldetag: 24.09.1998
(51) Int. Cl.: C04B 28/02, C04B 40/06, C04B 103/32

(54) **VERPUMPBARE BINDEMITTELZUSAMMENSETZUNG SOWIE VERFAHREN ZU IHRER HERSTELLUNG**
PUMPABLE BINDER COMPOSITION AND METHOD FOR PREPARING SAME
COMPOSITION DE LIANTS POMPABLE ET PROCEDE PERMETTANT DE LA PREPARER

(30) Priorität: 25.09.1997 AT 163397
(43) Veröffentlichungstag der Anmeldung: 19.07.2000
(73) Patentinhaber: Holcim Ltd., 8645 Jona (CH)
(72) Erfinder: DUPONT, Franck, F-59200 Tourcoing (FR); SUTER, Willi, CH-5233 Stilli (CH)
(74) Vertreter: Haffner, Thomas M., Dr.
(86) Internationale Anmeldenummer: IB9801486
(87) Internationale Veröffentlichungsnummer: WO9915475

(56) Entgegenhaltungen:
- EP-A- 0 619 340
- EP-A- 0 725 044
- WO-A-96/40598
- WO-A-97/22564
- WO-A-97/27153
- GB-A- 2 297 086
- DATABASE WPI Section Ch, Week 9636 Derwent Publications Ltd., London, GB; Class A93, AN 96-358436 XP002089418 & JP 08 169781 A (FUJITA KK), 2. Juli 1996

## Beschreibung

Die Erfindung bezieht sich auf eine stabile verpumpbare Bindemittelzusammensetzung, insbesondere für selbstnivellierende Systeme, welche u.a. Zement und andere mineralische Komponenten, wie z.B. Flugaschen, Schlacken, Stäube und/oder andere Puzzolane sowie Zuschlagstoffe enthält und auf ein Verfahren zur Herstellung einer derartigen verpumpbaren Bindemittelzusammensetzung.

Für die Herstellung von fließfähigen Bindemittelsystemen, welche über Pumpen an den Einsatzort verbracht werden sollen, wie sie beispielsweise für Estriche, große zusammenhängende Bodenflächen oder Bauteile bzw. Konstruktionen vorgeschlagen werden, ist es eine wesentliche Voraussetzung, daß ein gutes rheologisches Verhalten und damit eine entsprechend geringe Viskosität vorliegt. Nachteilig beim Zusatz von rheologie-beeinflussenden Additiven, wie beispielsweise Superverflüssigern, zu Bindemittelsystemen, ist der Umstand, daß zwar die geforderte Pumpbarkeit relativ leicht erreicht werden kann, aber andererseits die Gefahr besteht, daß Bestandteile des Bindemittelgemisches leicht sedimentieren und daß auf diese Weise inhomogene mangelhafte Baukörper entstehen. Fließfähige Bindemittelsysteme, welchen zur Verbesserung der Fließfähigkeit im allgemeinen Superverflüssiger zugesetzt werden, und insbesondere Bindemittelsuspensionen, wie z.B. Fließmörtel und Pumpbeton, müssen daher neben ihrer guten Verpumparkeit auch eine entsprechend geringe Neigung zur Sedimentation aufweisen. Ein weiteres Qualitätskriterium leicht verpumpbarer Bindemittelzusammensetzungen, z.B. bei selbstnivellierenden Estrichen, besteht darin, daß neben entsprechend hohen Endfestigkeiten auch hohe Frühfestigkeiten, beispielsweise wenigstens 2 MPa nach 24 h, gefordert werden.

Die Frühfestigkeit von verpumpbaren Bindemittelzusammensetzungen kann aber durch verschiedene Zusatzmittel, wie z.B. Superverflüssiger, Schwindkompensatoren, Abbinderegulatoren und fehlerhaftes Mix-Design deutlich herabgesetzt werden.

Schließlich ist eine weitere Voraussetzung für die Verwendbarkeit schnell-aushärtender verpumpbarer Bindemittelzusammensetzungen für die eingangs genannten Zwecke, daß nach dem Aushärten keine Risse entstehen. Um Rißbildung zu vermeiden, ist es bekannt, Schwindreduzierer einzusetzen, wobei häufig eingesetzte Schwindreduzierer, beispielsweise Diole bzw. Polyole, insbesondere Glykole bzw. Glykolderivate, sind. Mit derartigen Schwindreduzierern kann zwar in der Regel eine deutliche Verringerung der Rißbildung erzielt werden, gleichzeitig werden aber in aller Regel sowohl die Früh- als auch die Endfestigkeiten deutlich verringert. Zur Verringerung der Rißanfälligkeit wird in der EP 0 725 044 der Einsatz von Alkohol-Alkylenoxiden und in der GB 2 297 086 unter anderem der Einsatz von Polyethylenglykol beschrieben, wobei in der GB 2 297 086 vor allem der Einfluß von Polyethylenglykol auf die Viskosität und Pumpbarkeit der Mischung hervorgehoben wird. Die EP 0 725 044 zielt auf eine Verringerung der Rißanfälligkeit durch definierte Mischungsverhältnisse von Zement und Erdalkalisalzen, wie z.B. Gips, ab, wobei aber bestimmte Ca-Sulfate, wie z.B. Gips-Hemihydrate, als äußerst rasch verfestigend und in der Abbindegeschwindigkeit schwer zu kontrollieren beschrieben werden.

Schließlich ist bekannt, zur Erzielung höherer Frühfestigkeiten Abbindebeschleuniger zuzusetzen. Derartige Abbindebeschleuniger sollen die Frühfestigkeit erhöhen, wobei verschiedenartige Alkali- bzw. Erdalkalisalze als Abbindebeschleuniger als Stand der Technik beschrieben werden. Zur Verbesserung der rheologischen Eigenschaften und damit der Pumpbarkeit wurde in der WO 97/27153 bei anionische Polysaccharide enthaltenden Zementzubereitungen die Anhebung des Gehaltes an löslichen Sulfaten vorgeschlagen.

Bei gemeinsamer Verwendung von spezifischen Abbindebeschleunigern mit ausgewählten Stabilisatoren und geeigneten Schwindreduzierern wurde nun überraschenderweise gefunden, daß ganz bestimmte Kombinationen keine negativen Veränderungen in der Frühfestigkeit aufweisen, zugleich aber leicht verpumpbar sind sowie völlig homogen und ohne Rißbildung aushärten.

Die Erfindung zielt nun darauf ab, eine leicht verpumpbare Bindemittelzusammensetzung der eingangs genannten Art zu schaffen, welche sich neben ausgezeichneter Frühfestigkeit und hoher Endfestigkeit zugleich durch eine gute Homogenität und eine geringe Neigung zur Rißbildung bei ausgezeichneten selbstnivellierenden Eigenschaften auszeichnet.

Zur Lösung dieser Aufgabe ist die erfindungsgemäße verpumpbare Bindemittelzusammensetzung, welche u.a. Zement und andere mineralische Komponenten, wie z.B. Aschen, Schlacken und/oder Stäube, und herkömmliche Zuschlagstoffe, wie z.B. Sande oder Kiese, enthält, im wesentlichen dadurch gekennzeichnet, daß die Bindemittelzusammensetzung
- 0,1 bis 5,0 Gew.-% mineralische Salze, wie z.B. Thiosulfate, Nitrate, Nitrite, Formiate, Halogenide, Perchlorate, Silikate, Aluminate, Hydroxide, Carbonate und/oder Rhodanide von Alkali- und/oder Erdalkalimetallen,
- 0,0001 bis 0,5 Gew.-% eines Stabilisators, wie z.B. eines Biopolymers, insbesondere Xanthan Gum und/oder Welan Gum und
- 0 bis 3,5 Gew.-% eines Superverflüssigers, wie z.B. Ligninsulfonate (LS), Melaminsulfonsäure-Formaldehydkondensate (MSFC), Naphthalinsulfonsäure-Formaldehydkondensate (NSFC), Polycarboxylate, Polyacrylsäure-Derivate und/oder Mischpolymerisate,
- 0,5 bis 8,0 Gew.-% eines Schwindreduzierers, wie z.B. Diole und/oder Polyole, insbesondere Glykole und/oder Glykolderivate, enthält, wobei die Angaben in Gew.-% auf das Bindemittel bezogen sind.

Überraschenderweise hat sich gezeigt, daß mineralische Salze gemeinsam abgestimmt mit geringen Mengen eines typischen Biopolymers, wie beispielsweise Welan Gum, und Schwindreduzierern sowohl die Frühfestigkeit als auch die Endfestigkeit sowie das Rißbildungsverhalten im positiven Sinne beeinflussen können. Trotz Verwendung von Biopolymeren, welche in der Regel die Pumpbarkeit verschlechtern würden, läßt sich eine gut verpumpbare, selbstnivellierende und zu geringer Sedimentation neigende Mischung schaffen, welche in besonders einfacher und vorteilhafter. Weise verarbeitet werden kann. Überraschenderweise konnten die gewünschten Produkteigenschaften ohne Verwendung von Superverflüssigern, welche in der Regel auch Entschäumer erfordern, erzielt werden, wobei im Falle der Verwendung von Superverflüssigern die Verwendung von Stabilisatoren besondere Bedeutung zukommt. So konnte gezeigt werden, daß Superverflüssiger ohne Stabilisatoren, insbesondere Biopolymere, bei den angestrebten rheologischen Eigenschaften Fließestriche und Fließ-/Pumpbeton eine unerwünschte Sedimentation bewirken.

Mit Vorteil ist die erfindungsgemäße Ausbildung hierbei dadurch gekennzeichnet, daß stabile pumpbare Mischungen einen Wasser-Bindemittel-Faktor (W/B-Faktor) von 0,1 bis 0,5 aufweisen. Eine besonders vorteilhafte Pumpbarkeit bei gleichzeitig rascher Abbindereaktion wurde dann gefunden, wenn die pumpbare Mischung 10 bis 20 Gew.-% und insbesondere 15,0 bis 17,0 Gew.-% Wasser (bezogen auf das Bindemittel) enthält.

Besonders vorteilhafte Mischungsverhältnisse und damit positive Produkteigenschaften im eingangs genannten Sinne ergeben sich, wenn, wie es einer bevorzugten Weiterbildung entspricht, die Bindemittelzusammensetzung zwischen 1 bis 3,0 Gew.-% Natriumthiosulfat, bezogen auf das Bindemittel, enthält, wobei diese Werte noch dadurch verbessert werden können, wenn der Bindemittelzusammensetzung Welan Gum in einer Menge von 0,0001 bis 0,005 Gew.-% (bezogen auf Zement) zugegeben werden.

Ein besonders geringes Schwindverhalten wurde festgestellt, wenn im Rahmen der erfindungsgemäßen Bindemittelzusammensetzung die Gesamtmischung so gewählt wird, daß die Bindemittelzusammensetzung Diethylenglykolbutylether in einer Menge von 3,5 bis 4,5 Gew.-%, bezogen auf das Bindemittel, enthält.

Das erfindungsgemäße Verfahren zur Herstellung der pumpbaren Bindemittelzusammensetzung ist dadurch gekennzeichnet, daß eine trockene Mischung aus Bindemitteln, wie z.B. Puzzolanen und/oder Zementen, mineralischen Zusatzstoffen, Zuschlagstoffen, anorganischen Salzen und Biopolymeren hergestellt wird, und daß die so hergestellte, lagerfähige Trockenmischung mit Wasser und einem, insbesondere flüssigen, Schrumpfkompensator zur Herstellung einer pumpbaren Bindemittelzusammensetzung vermischt wird. Eine derartige Verfahrensweise hat den Vorteil, daß eine Vormischung in entsprechender Verpackung bereitgestellt werden kann, welche vor Ort lediglich durch Zusatz von Wasser und Zusatz des flüssigen Schwindreduzierers zur Herstellung der pumpbaren Zementmittelzusammensetzung in einem Mischer vermischt wird. Sofern ein fester Schwindreduzierer, wie z.B. Neopentylglykol, verwendet wird, kann dieser auch dem Trockengemisch vorab schon zugemischt werden.

Die Erfindung wird nachfolgend anhand eines Ausführungsbeispieles näher erläutert.

Es wurden 250 kg Portlandzement, 250 kg trockene Flugasche sowie insgesamt 1500 kg Sand/Kies unterschiedlicher Körnung mit 2,0 Gew.-% Natriumthiosulfat (bezogen auf Zement) und 0,0001 Gew.-% Welan Gum in einer trockenen Mischung zubereitet. Die so erhaltene Mischung wurde in einem Silo ohne Qualitätseinbußen gelagert und erwies sich auch über längere Zeit lagerstabil.

Dem Trockengemisch können zusätzlich, je nach Bedarf, übliche Beton- bzw. Zementzusatzmittel, wie z.B. Wasserreduzierer, Superverflüssiger, Abbinderegulatoren, Alkali-Aggregat-Reaktionshemmer, Entlüftungsmittel, Frostschutzmittel, Auswaschverhinderer, Korrosionsinhibitoren, Zusätze für die Permeabilitätskontrolle, Expansionshilfen, Trocknungsmittel, Fungicide und Algicide, Pigmente und Farbstoffe, Polymere und/oder weitere Pumphilfen zugegeben werden.

Vor der Verwendung und dem Einsatz als verpumpbare Mischung wurden vor Ort 16,0 Gew.-% Wasser (bezogen auf das Bindemittel) und 4,0 Gew.-% Diethylenglykolbutylether (bezogen auf das Bindemittel) dem Trockengemisch zugegeben und in einem konventionellen Betonmischer vermischt, worauf das erhaltene verpumpbare Gemisch mittels einer Kolbenpumpe an den Einsatzort transportiert wurde. Die Fließfähigkeit und damit die Pumpbarkeit wurde über einen Zeitraum von mehr als 3 Stunden unverändert bei einer Temperatur von 25 ± 4 °C als gleichbleibend festgestellt. Eine Sedimentation von Bestandteilen der Bindemittelzusammensetzung konnte nicht beobachtet werden.

Der pumpbaren Bindemittelzusammensetzung können ebenfalls zusätzlich, je nach Bedarf, übliche Beton- bzw. Zementzusatzmittel, wie z.B. Wasserreduzierer, Superverflüssiger, Abbinderegulatoren, Alkali-Aggregat-Reaktionshemmer, Entlüftungsmittel, Frostschutzmittel, Auswaschverhinderer, Korrosionsinhibitoren, Zusätze für die Permeabilitätskontrolle, Expansionshilfen, Trocknungsmittel, Fungicide und Algicide, Pigmente und Farbstoffe, Polymere und/oder weitere Pumphilfen zugegeben werden.

Die verpumpbare Mischung war ohne weiteren Arbeitsaufwand selbstnivellierend. Es ließ sich eine vollständig ebene, gleichmäßige und zusammenhängende Oberfläche erzielen. In der Folge wurden an der Oberfläche über einen Zeitraum von etwa einer Stunde maximal 2 bis 3 mm Wasser beobachtet, welches jedoch in der Folge wiederum in die vergossene Mischung eingebunden wurde.

Bei einer maximalen Schrumpfung von unter 400 Mikrometer/m nach 45 Tagen wurde eine Endfestigkeit von 25 MPa gemessen. Auch der frühe Festigkeitsverlauf bis zur Erzielung der guten Endfestigkeit entsprach allen Anforderungen eines zementösen Pump-Estriches mit hoher Endfestigkeit und hoher Qualität.

## Patentansprüche

1. Stabile pumpbare Bindemittelzusammensetzung, insbesondere für selbstnivellierende Systeme, welche u.a. Zement und andere mineralische Komponenten, wie z.B. Flugaschen, Schlacken, Stäube und/oder andere Puzzolane, sowie Zuschlagstoffe enthält, **dadurch gekennzeichnet, daß** die Bindemittelzusammensetzung
• 0,1 bis 5,0 Gew.-% mineralische Salze, wie z.B. Thiosulfate, Nitrate, Nitrite, Formiate, Halogenide, Perchlorate, Silikate, Aluminate, Hydroxide, Carbonate und/oder Rhodanide von Alkali- und/oder Erdalkalimetallen,
• 0,0001 bis 0,5 Gew.-% eines Stabilisators, wie z.B. eines Biopolymers, insbesondere Xanthan Gum und/oder Welan Gum und
• 0 bis 3,5 Gew.-% eines Superverflüssigers, wie z.B. Ligninsulfonate (LS), Melaminsulfonsäure-Formaldehydkondensate (MSFC), Naphthalinsulfonsäure-Formaldehydkondensate (NSFC), Polycarboxylate, Polyacrylsäure-Derivate und/oder Mischpolymerisate,
• 0,5 bis 8,0 Gew.-% eines Schwindreduzierers, wie z.B. Diole und/oder Polyole, insbesondere Glykole und/oder Glykolderivate, enthält, wobei die Angaben in Gew.-% auf das Bindemittel bezogen sind.

2. Stabile pumpbare Bindemittelzusammensetzung nach Anspruch 1, **dadurch gekennzeichnet, daß** sie einen Wasser-Bindemittelfaktor zwischen 0,1 und 0,5 aufweist.

3. Verpumpbare Bindemittelzusammensetzung nach Anspruch 1 oder 2, **dadurch gekennzeichnet, daß** die pumpbare Mischung zwischen 10 und 20 Gew.-% Wasser enthält.

4. Verpumpbare Bindemittelzusammensetzung nach Anspruch 1, 2 oder 3, **dadurch gekennzeichnet, daß** die Bindemittelzusammensetzung bezogen auf das Bindemittel zwischen 1,0 und 3,0 Gew.-% Natriumthiosulfat enthält.

5. Verpumpbare Bindemittelzusammensetzung nach einem der Ansprüche 1 bis 4, **dadurch gekennzeichnet, daß** die Bindemittelzusammensetzung Welan Gum in einer Menge von 0,0001 bis 0,005 Gew.-% (bezogen auf Zement) enthält.

6. Verpumpbare Bindemittelzusammensetzung nach einem der Ansprüche 1 bis 5, **dadurch gekennzeichnet, daß** die Bindemittelzusammensetzung Diethylenglykolbutylether in einer Menge von 3,5 bis 4,5 Gew.-% (bezogen auf das Bindemittel) enthält.

7. Verpumpbare Bindemittelzusammensetzung nach einem der Ansprüche 1 bis 6, **dadurch gekennzeichnet, daß** die pumpbare Mischung 15 bis 17 Gew.-% Wasser enthält.

8. Verfahren zur Herstellung einer pumpbaren Bindemittelzusammensetzung nach einem der Ansprüche 1 bis 7, **dadurch gekennzeichnet, daß** eine feste Mischung aus Bindemittel, wie z.B. wie Zement und/oder Puzzolanen, Zuschlagstoffen, anorganischen Salzen und Biopolymer hergestellt wird, und daß die so hergestellte, lagerfähige Trockenmischung mit Wasser und dem Schrumpfkompensator zur Herstellung eines Pumpbetons vermischt wird.

## Claims

1. A stable pumpable binder composition, in particular for self-levelling systems, containing i.a. cement and other mineral components such as, e.g., flue ashes, slags, dusts and/or other puzzolans as well as aggregates, **characterized in that** the binder composition contains
• 0.1 to 5.0 % by weight of mineral salts such as, e.g., thiosulfates, nitrates, nitrites, formiates, halogenides, perchlorates, silicates, aluminates, hydroxides, carbonates and/or rhodanides of alkali and/or earth alkali metals,
• 0.0001 to 0.5 % by weight of a stabilizer such as, e.g., a biopolymer, in particular xanthan gum and/or welan gum, and
• 0 to 3.5 % by weight of a superliquefier such as, e.g., lignin sulfonate (LS), melamine sulfonic acid - formaldehyde condensates (MSFC), naphthalene sulfonic acid - formaldehyde condensates (NSFC), polycarboxylates, polyacrylic acid derivatives and/or mixed polymers,
• 0.5 to 8.0 % by weight of a shrinkage reducing agent such as, e.g., diols and/or polyols, in particular glycols and/or glycol derivatives,
any indications in % by weight being based on the binder.

2. A stable pumpable binder composition according to claim 1, **characterized in that** it comprises a water - binder factor of between 0.1 and 0.5.

3. A pumpable binder composition according to claim 1 or 2, **characterized in that** the pumpable mixture contains between 10 and 20 % by weight water.

4. A pumpable binder composition according to claim 1, 2 or 3, **characterized in that** the binder composition contains between 1.0 and 3.0 % by weight sodium thiosulfate, based on the binder.

5. A pumpable binder composition according to any one of claims 1 to 4, **characterized in that** the binder composition contains welan gum in an amount ranging from 0.0001 to 0.005 % by weight (based on cement).

6. A pumpable binder composition according to any one of claims 1 to 5, **characterized in that** the binder composition contains diethylene glycol butyl ether in an amount ranging from 3.5 to 4.5 % by weight (based on the binder).

7. A pumpable binder composition according to any one of claims 1 to 6, **characterized in that** the pumpable mixture contains 15 to 17 % by weight water.

8. A method for producing a pumpable binder composition according to any one of claims 1 to 7, **characterized in that** a solid mixture of a binder such as, e.g., cement and/or puzzolans, aggregates, inorganic salts and a biopolymer is prepared, and that the thus prepared storable dry mixture is mixed with water and the shrinkage compensator to produce a pumping concrete.

## Revendications

1. Composition de liant stable apte au pompage, en particulier pour des systèmes autonivellant, qui contient entre autres du ciment et d'autres composants minéraux, comme par exemple des cendres volantes, des laitiers, des poussières et/ou d'autres pouzzolanes, ainsi que des additifs, **caractérisée en ce que** la composition de liant contient
• 0,1 à 5,0% en poids de sels minéraux, comme par exemple des thiosulfates, des nitrates, des nitrites, des formiates, des halogénures, des perchlorates, des silicates, des aluminates, des hydroxydes, des carbonates et/ou des sulfocyanates de métaux alcalins et/ou alcalino-terreux;
• 0,0001 à 0,5% en poids d'un stabilisant, comme par exemple un biopolymère, en particulier de la gomme de xanthane et/ou de la gomme de Welan, et
• 0 à 3,5% en poids d'un superfluidifiant, comme par exemple des sulfonates de lignine (LS), des condensats d'acide mélaminosulfonique-formaldéhyde (MSFC), des condensats d'acide naphtaline sulfonique-formaldéhyde (NSFC), des polycarboxylates, des dérivés d'acide polyacrylique et/ou des copolymères,
• 0,5 à 8,0% en poids d'un agent réducteur de retrait, comme par exemple des diols et/ou des polyols, en particulier des glycols et/ou des dérivés de glycol, les indications en pourcentage en poids se rapportant au liant.

2. Composition de liant stable apte au pompage selon la revendication 1, **caractérisée en ce qu'**elle présente un facteur eau-liant compris entre 0,1 et 0,5.

3. Composition de liant apte au pompage selon la revendication 1 ou 2, **caractérisée en ce que** le mélange apte au pompage contient 10 à 20% en poids d'eau.

4. Composition de liant apte au pompage selon la revendication 1, 2 ou 3, **caractérisée en ce que** la composition de liant, sur la base du liant, contient 1,0 à 3,0% en poids de thiosulfate de sodium.

5. Composition de liant totalement apte au pompage selon l'une des revendications 1 à 4, **caractérisée en ce que** la composition de liant contient de la gomme de Welan dans une quantité comprise de 0,0001 à 0,005% en poids (sur la base du ciment).

6. Composition de liant totalement apte au pompage selon l'une des revendications 1 à 5, **caractérisée en ce que** la composition de liant contient du butyléther de diéthylèneglycol dans une quantité comprise de 3,5 à 4,5% en poids (sur la base du liant).

7. Composition de liant totalement apte au pompage selon l'une des revendications 1 à 6, **caractérisée en ce que** le mélange apte au pompage contient 15 à 17% en poids d'eau.

8. Procédé de préparation d'une composition de liant apte au pompage selon l'une des revendications 1 à 7, **caractérisé en ce que** l'on prépare un mélange solide composé d'un liant, comme par exemple du ciment et/ou des pouzzolanes, d'additifs, de sels inorganiques et d'un biopolymère, et **en ce que** le mélange sec apte au stockage ainsi préparé est mélangé avec de l'eau et l'agent de compensation de retrait pour fabriquer un béton pompé.
